# EUROPÄISCHE PATENTSCHRIFT

(11) **EP 1 677 041 B1**
(45) Veröffentlichungstag und Bekanntmachung des Hinweises auf die Patenterteilung: **13.03.2013**
(21) Anmeldenummer: 05028614.5
(22) Anmeldetag: 28.12.2005
(51) Int. Cl.: F16L 37/14

(54) **Fluidleitungsverbindungsanordnung**
Connection arrangement for fluid conduits
Dispositif de raccordement pour conduites de fluide

(30) Priorität: 29.12.2004 DE 202004020093 U
(43) Veröffentlichungstag der Anmeldung: 05.07.2006
(73) Patentinhaber: Eugster/Frismag AG, 8580 Amriswil (CH)
(72) Erfinder: Fischer, Daniel, 8590 Romanshorn (CH); Brendle, Christian, 8580 Amriswil (DE)
(74) Vertreter: Schubert, Siegmar

(56) Entgegenhaltungen:
- EP-A- 1 538 384
- WO-A-03/074918
- FR-A- 2 808 071
- US-A1- 2004 140 668

## Beschreibung

Die Erfindung betrifft eine Fluidleitungsverbindungsanordnung für eine Kaffee- bzw. Espressomaschine.

Eine solche bekannte Fluidleitungsverbindungsanordnung ist mit mindestens einem Verbindungselement ausgebildet, welches geeignet ist, einen Endabschnitt einer ersten Leitung mit einer zweiten Leitung, einem Anschlussstutzen oder dgl. dicht zu verbinden.

Unter dichter Verbindung wird eine druckdichte Verbindung verstanden, die insbesondere auch den Austritt von unter Druck stehender Flüssigkeit verhindert

Nach dem Stand der Technik werden Schlauch- bzw. Rohrverbindungen beispielsweise durch Kleben hergestellt. Solche Verbindungen bedingen jedoch zeitlich genau einzuhaltende Verbindungsverfahren, insbesondere mit Aushärten eines Klebers. Die fertigen Verbindungen sind nicht ohne weiteres lösbar

Andere, lösbare Verbindungen sind beispielsweise mit Überwurfmuttern und mit diesen zusammenwirkenden, mit Gewinde versehenen Anschlussteilen realisiert. Diese Verbindungsanordnungen bedingen aufwendig hergestellte Teile und zeitaufwendige Montagevorgänge.

Zum Stand der Technik gehört auch eine Rohrverbindung mit einer Spannhülse, die zwei miteinander zu verschraubende Hülsenhalbschalen umfaßt, deren flanschartige Ansätze durch Schrauben miteinander verspannt werden (DE-A-198 37 803). Die Spannhülse übergreift zwei Rohrenden, und zwar ein erstes Rohrende mit einer ringförmigen Auswölbung und ein zweites, profiliertes Rohrende mit einem Abschnitt größeren Durchmessers. - Auch infolge der Verschraubung und Verspannung ist die Spannhülse umständlich zu montieren und zum Verbinden von zwei Schlauchenden nicht ohne weiteres geeignet.

Andere zum Stand der Technik gehörende Rohrverbinder dienen nur zum Verbinden eines speziellen Rohrendes mit wenigstens einer ringförmig erweiterten Wand (DE-A-41 42 640, US-A-6086118).

Bei einer bekannten Fluidleitungsverbindungsanordnung, mit der ein Schlauchende verbunden werden kann, dient als Verbindungsmuffe ein Metallring, aus dem innen hakenförmige Vorsprünge ausgebildet sind, die in das Schlauchende als erste Leitung außen eingreifen (US-A-3 637 240). Die hakenförmigen Vorsprünge werden insbesondere durch Wirbelstrominduktion in dem Metallring und damit einhergehende Erwärmung des Metallrings in dem sich dabei erweichenden Schlauchende aus Kunststoff verankert, wobei jedoch Einkerbungen in dem Schlauchende auftreten, die ihn schwächen. Andererseits weist eine Verbindungshülse eine innere Bohrung auf, in die das Schlauchende eingreifen kann, sowie eine erweiterte Innenbohrung, in die der Metallring auf dem Endabschnitt der ersten Leitung paßt. In einen Raum in der Verbindungshülse zwischen einer ringförmigen Schulter, die zwischen der inneren Bohrung und der erweiterten Innenbohrung gebildet ist, sowie einer vorderen, d.h. axial äußeren ringförmigen Stirnseite des Metallrings ist ein abdichtender O-Ring aus Gummi oder einem Elastomer eingebracht, der zwar an der vorderen ringförmigen Stirnseite des Metallrings, nicht aber gleichzeitig an der ringförmigen Schulter in der Verbindungshülse anliegt. Somit kann eine Abdichtung nur auf einer inneren Umfangsseite des Metallrings und auf dessen äußerer Umfangsseite erfolgen, wenn der O-Ring sowohl an die erste Leitung als auch an den Innenumfang der Verbindungshülse dicht angepasst ist. - Zur Montage dient eine im wesentlichen U-förmige Klammer, die in seitliche Bohrungen in der Verbindungshülse eingeschoben wird, und zwar hinter den in die Verbindungshülse zusammen mit dem Endabschnitt der ersten Leitung eingeschobenen Metallring.

Bei einer bekannten Fluidverbindungsanordnung der eingangs genannten Gattung, die allerdings zur Speisung eines Hydraulikzylinders mit einem Fluid unter Druck vorgesehen ist (FR-A-2 808 071), kann eine Verbindungsmuffe auf einem Leitungsende durch Laser aufgeschweißt sein. Hierzu besteht eines dieser beiden zu verbindenden Elemente aus einem für Laserstrahlung transparenten Kunststoff, während das andere der beiden Elemente aus Laserstrahlung absorbierendem Kunststoff besteht, der sich unter Laserstrahlung erwärmt und mit dem Kunststoffring des erstgenannten der beiden Elemente verschweißt. Zum Verschweißen von Schlauchenden, die aus einem keine oder wenig Laserstrahlung absorbierenden Kunststoff bestehen, dürfte diese Laserverschweißung nicht zweckmäßig bzw. brauchbar sein, da die Laserenergie von dem absorbierenden Material in Wärme umgesetzt werden müsste, aus dem in diesem Fall die Verbindungsmuffe besteht. Nur ein relativ geringer Teil der Laserstrahlung gelangte in diesem Fall in das Innere der Verbindungsmuffe an die Stelle, an der die Verschweißung mit dem Schlauchende stattfinden soll. Hierzu kann auch das bei einer anderen Ausführungsform vorgesehene Spritzen von Dichtungsringen aus zwei Materialien auf der Verbindungsmuffe keine Anregung geben.

Der vorliegenden Erfindung liegt daher die Aufgabe zugrunde, eine Fluidleitungsverbindungsanordnung für eine Kaffee- bzw. Espressomaschine zu schaffen, mit der ein Schlauchende ohne Schwächung in fertigungsgünstiger Weise zuverlässig verbunden werden kann.

Diese Aufgabe wird mit einer Fluidleitungsverbindungsanordnung mit den in dem Anspruch 1 angegebenen Merkmalen gelöst.

Die Verbindungsmuffe wird demgemäss aus einem vorgefertigten coextrudierten Kunststoffschlauch hergestellt, der nur aus einem Außenschlauch aus einem laserstrahldurchlässigen, insbesondere thermoplastischen Kunststoff und aus einem zusammen mit diesem coextrudierten Innenschlauch aus einem laserstrahlabsorbierenden, schweißbaren, insbesondere thermoplastischen Kunststoff besteht, von dem die Verbindungsmuffe vorgegebener Länge abgetrennt wird.

Zur Herstellung des coextrudierten Kunststoffschlauches, aus dem die Verbindungsmuffen abgelängt werden, basieren die Materialien des Außenschlauchs und des Innenschlauchs auf dem gleichen laserstrahldurchlässigen Kunststoff, wobei der Kunststoff des Innenschlauchs nur zusätzlich laserstrahlabsorbierend modifiziert ist. Damit kann generell eine unproblematische Coextrusion erfolgen, als deren Ergebnis der Außenschlauch fest und dicht auf dem Innenschlauch sitzt. Entsprechendes gilt für die aus dem coextrudierten Kunststoffschlauch gefertigten Verbindungsmuffen.

Generell beziehen sich in der vorliegenden Beschreibung die Materialangaben und die daraus resultierenden Eigenschaften des Außenschlauchs und des Innenschlauchs des coextrudierten Kunststoffschlauchs analog auf die ringförmigen Außenschlauchabschnitte und ringförmigen Innenschlauchabschnitte der Verbindungsmuffen, die aus dem coextrudierten Kunststoffschlauch hergestellt werden.

Im einzelnen ist gemäß Anspruch 2 der Kunststoff des Innenschlauchs vorteilhaft einfach laserstrahlabsorbierend eingefärbt, wodurch die übrigen Materialeigenschaften des Kunststoffs erhalten bleiben.

Besonders bewährt hat sich zu Anspruch 3 als thermoplastisches Material des Innenschlauchs ein an sich laserstrahldurchlässiger Kunststoff, in dem Rußpartikel - möglichst gleichmäßig - verteilt sind.

Es hat sich zu Anspruch 4 als ausreichend herausgestellt, wenn der Gewichtsanteil der Rußpartikel in dem Kunststoff des Innenschlauchs 1 - 2 % beträgt. Die Wanddicke des Innenschlauchs soll jedenfalls ausreichend sein, um eine genügende Laserstrahlabsorption für eine Verschweißung bzw. Verschmelzung mit dem Kunststoff des ersten Schlauchs zu gewährleisten. Gemäß Anspruch 6 ist eine Wanddicke von 0,2 bis 0,3 mm ausreichend. Der coextrudierte Schlauch kann dabei überwiegend aus laserstrahldurchlässigem Kunststoff bestehen, der also nicht laserstrahlabsorbierend modifiziert ist.

Die abgetrennte, ringförmige Verbindungsmuffe kann zu einem beliebigen anschließenden Zeitpunkt auf einen Endabschnitt eines Schlauches aus schweißbarem, insbesondere thermoplastischem Kunststoff, der die erste zu verbindende Leitung bildet, so aufgeschoben werden, daß ein vorderer Abschnitt der ersten Leitung aus der ringförmigen Verbindungsmuffe herausragt, um in dieser Position in einem Werkzeug gehalten auf die erste Leitung aufgelasert zu werden. Insbesondere indem der laserstrahlabsorbierende Innenschlauch aus thermoplastischem Kunststoff durch den Laserstrahl erwärmt wird und schmilzt, verbindet er sich mit der ebenfalls schmelzenden Oberfläche der ersten Leitung aus ebenfalls thermoplastischem Kunststoff, so daß die ringförmige Verbindungsmuffe nach Abkühlen fest in exakter Position auf dem Endabschnitt der ersten Leitung sitzt. Wegen der Laserdurchlässigkeit des Außenschlauchs wird bei dem oben erwähnten Laservorgang der Laserstrahl nicht an ungeeigneter Stelle absorbiert und vor dem beabsichtigten Erwärmungsbereich geschwächt, sondern in diesem konzentriert. Ein Stützrohr ist zum sicheren form- und kraftschlüssigen Aufbringen der Verbindungsmuffe auf einem Endabschnitt eines Schlauchs, der die erste Leitung darstellt, nicht erforderlich, da bei der Montage der Verbindungsmuffe auf dem Endabschnitt des Schlauchs keine nennenswerten Kräfte ausgeübt werden, die ihn deformieren könnten. Vielmehr wird die vorgefertigte ringförmige Verbindungsmuffe auf dem Schlauch, der die erste Leitung darstellt, nur provisorisch in dem oben erwähnten Werkzeug gehalten, bevor sie mit diesem durch Lasern form- und kraftschlüssig zuverlässig verbunden wird, so daß sich der Schlauch, der die erste Leitung darstellt, auch aus der vollständig montierten Fluidverbindungsanordnung mit der Verbindungshülse, die am Ende einer zweiten Leitung angebracht ist, und einem Arretierungselement, welches an der axial inneren Stirnseite der in die Verbindungshülse eingesteckten Verbindungsmuffe anliegt, nicht unbeabsichtigt lösen und verrutschen kann. - Damit ist auch eine wichtige Voraussetzung für eine zuverlässige Abdichtung der Fluidverbindungsanordnung nach außen selbst bei hohem Innendruck erfüllt. - Die gegebenenfalls gewünschte Lösbarkeit der ersten Leitung mit der aufgelaserten Verbindungsmuffe von einer zweiten Leitung, von deren Ende die Verbindungshülse vorsteht, wird durch die form- und kraftschlüssige Verbindung der Verbindungsmuffe mit dem Endabschnitt der ersten Leitung nicht beeinträchtigt. - Generell zeichnet sich die Fluidverbindungsanordnung mit der auf den Endabschnitt der ersten Leitung aufgelaserten Verbindungsmuffe durch vielseitige Anwendungsmöglichkeiten in einer Kaffee- bzw. Espressomaschine aus. Während die erste Leitung ein Schlauch aus insbesondere thermoplastischem Material ist, das sich jedenfalls mit dem ringförmigen Innenschlauchabschnitt der Verbindungsmuffe durch Laserstrahlerwärmung zuverlässig verschweißen läßt, kann die zweite Leitung eine flexible Leitung bzw. ein Schlauch insbesondere aus Kunststoff sein oder aber eine starre Leitung oder ein starrer Leitungsabschnitt aus Kunststoff oder ein metallisches Rohr. - In jedem der vorgenannten Alternativen ist die Verbindungshülse, die von einem Ende der zweiten Leitung vorsteht, die mit der ersten Leitung zu verbinden ist, geeignet, den Endabschnitt der ersten Leitung mit der Verbindungsmuffe aufzunehmen.

In der Verbindungshülse ist innen bei dem Ende der zweiten Leitung bzw. des die zweite Leitung bildenden Leitungsabschnitts eine ringförmige Schulter ausgeformt, die zusammen mit der axial äußeren ringförmigen Stirnseite der Verbindungsmuffe eine Abdichtfunktion ausüben kann. Indem an der Verbindungshülse ein Arretierungselement lösbar angebracht wird, welches im zusammengesteckten Zustand der Verbindungsmuffe und der Verbindungshülse an der axial inneren Stirnseite der Verbindungsmuffe anliegt, gelangt bei hierzu geeigneter Gestaltung der Fluidverbindungsanordnung, insbesondere des Inneren der Verbindungshülse und der Länge sowie Lage der Verbindungsmuffe auf dem Endabschnitt der ersten Leitung die vordere ringförmige Stirnseite der Verbindungsmuffe unmittelbar, siehe Anspruch 13, oder - über ein Dichtelement mittelbar - an der ringförmigen Schulter der Verbindungshülse abdichtend zur Anlage.

Als Dichtelement kann insbesondere gemäß Anspruch 1 2 ein einfacher O-Ring dienen, der somit zwischen der ringförmigen Schulter der Verbindungshülse und der axial äußeren ringförmigen Stirnseite der Verbindungsmuffe dicht anliegend eingeschlossen wird. Indem der O-Ring zwischen der ringförmigen Schulter der Verbindungshülse und der axial äußeren ringförmigen Stirnseite der Verbindungsmuffe zusammengepreßt wird, kann der O-Ring darüber hinaus eine gute Abdichtung auch an seinem Außenumfang in der Verbindungshülse und an seinem Innenumfang auf dem Endabschnitt der ersten Leitung bewirken.

Die letztgenannte Dichtfunktion auf dem Endabschnitt der ersten Leitung kann dadurch unterstützt bzw. ersetzt werden, indem gemäß Anspruch 25 die Verbindungsmuffe rundum dicht auf den Endabschnitt der ersten Leitung gelasert wird.

Zum Erzielen einer form- und kraftschlüssigen Verbindung bestehen der Schlauch als erste Leitung und der coextrudierte Schlauch, aus dem die Verbindungsmuffen gefertigt werden, abgesehen von einer Modifikation des Kunststoffs des Innenschlauchs, gemäß Anspruch 6 aus dem gleichen schweißaren Kunststoff.

Als Material des coextrudierten Schlauchs - und vorzugsweise auch des Schlauchs, der die erste Leitung ist, - eignet sich generell ein Copolymer gemäß Anspruch 7.

Besonders geeignet ist Tetrafluormethylen, Anspruch 9 8, bzw. Hexafluorpropylen, Anspruch 9.

Formmerkmale der Verbindungsmuffe und des die erste Leitung bildenden Schlauchs, die eine fertigungsgünstige Herstellung der Verbindung des Schlauchs mit der Verbindungsmuffe unter Verwendung unkomplizierter Werkzeuge ermöglichen, sind in Anspruch 10 angegeben.

Indem die Verbindungsmuffe gemäß Anspruch 11 als zylindrischer Ring ausgebildet ist, der in einem Abstand von einem Ende des Schlauchs als erste Leitung auf deren zylindrischen Endabschnitt aufgelasert ist, wird bei entsprechender hohlzylindrischer Innenform der Verbindungshülse eine von der Drehstellung der Verbindungsmuffe und der Verbindungshülse unabhängige, zuverlässige Verbindung gestattet.

Weitere vorteilhafte Merkmale der Fluidleitungsverbindungsanordnung sind in den Ansprüchen 14 - 25 angegeben.

Die Verbindungshülse kann nach Anspruch 14 insbesondere innen abgestuft zylindrisch sein, um die oben vor allem im Blick auf die Ansprüche 1 2 und 13 genannte ringförmige Schulter zu realisieren.

In herstellungsgünstiger Weise ist nach Anspruch 15 die Verbindungshülse ein Kunststoffspritzteil.

Weiter die Herstellung rationalisierend kann die Verbindungshülse gemäß Anspruch 16 zusammen mit dem Ende der zweiten Leitung aus Kunststoff ausgeformt sein, wobei die zweite Leitung auch ein Ausgang oder Eingang eines anderen integralen Konstruktionselements sein kann. In diesem Fall ist die zweite Leitung vorzugsweise eine starre Kunststoffleitung.

Es ist aber gemäß Anspruch 17 auch möglich, daß die Verbindungshülse metallisch ausgeführt ist und auf einen Endabschnitt eines Metallrohrs als zweite Leitung aufgelötet ist.

Es können mindestens zwei gemäß Anspruch 14 ausgebildete Verbindungshülsen in einem gemeinsamen Verbindungsteil nach Anspruch 18 realisiert sein, welches mindestens einen die Verbindungshülsen verbindenden Leitungsabschnitt umfaßt. Insbesondere kann das gemeinsame Verbindungsteil mit drei Verbindungshülsen entwickelt sein, die in dem Verbindungsteil über einen Leitungsabschnitt mit Abzweigung miteinander verbunden sind. Das letztgenannte Verbindungsteil kann somit auch als dreiseitiges Verbindungsteil bezeichnet werden. Wie oben bereits erwähnt, kann eine der Verbindungshülsen auch integraler Bestandteil eines anderen Konstruktionselements, beispielsweise eines Durchlauferhitzers, sein.

Weiterhin sind zwei Ausführungsformen des Arretierungselements entwickelt, welches dazu dient, die in die Verbindungshülse eingeschobene Verbindungsmuffe in ihrer gewünschten Position zu halten:
In einer ersten Ausführungsform gemäß Anspruch 20 ist das Arretierungselement als Federklammer ausgebildet, die durch eine innen seitlich offene Schlitz-aufnahme in die Verbindungshülse reicht und an der axial inneren ringförmigen Stirnseite der eingesteckten Verbindungsmuffe zur Anlage gelangt. Die Federklammer kann im Bedarfsfall aus der Schlitzaufnahme entfernt werden, um die Verbindung der Verbindungshülse mit der Verbindungsmuffe zu lösen. Desgleichen ist die Federklammer wieder verwendbar.

In einer Variante ist die Schlitzaufnahme der Verbindungshülse auch außen seitlich offen. Dies ermöglicht eine unkomplizierte Fertigung der Verbindungshülse und eine einfachere Handhabung der Federklammer zur Arretierung oder zum Lösen der Fluidleitungsverbindung.

Es ist gemäß Anspruch 22 aber auch möglich, daß die Verbindungshülse außen seitlich geschlossen ist, so daß die Federklammer weitgehend in der Schlitzaufnahme verschwindet und nicht durch Innendruck in den Leitungen herausgedrückt werden kann.

Alternativ kann das Arretierungselement gemäß Anspruch 23 als miteinander klappbar bzw. zusammensteckbar zu verbindende Halbschalen ausgebildet sein. Die Halbschalen weisen an ihren Stirnseiten Stege mit Ausnehmungen auf, so daß die Verbindungsmuffe und die Verbindungshülse, welche die Verbindungsmuffe aufnimmt, zwischen den aufeinander geklappten bzw. gesteckten, miteinander verrasteten Halbschalen und den Stegen eingeschlossen sind. Durch Lösen der Rastelemente lassen sich die Halbschalen wiederum von den Leitungsenden mit der Verbindungsmuffe und der Verbindungshülse entfernen, um die Verbindung der beiden Leitungsenden zu lösen. Desgleichen sind die Halbschalen wieder verwendbar.

Bevorzugt bestehen die beiden Halbschalen sowie die an sie angeformten Elemente gemäß Anspruch aus Kunststoff.

Besonders vorteilhaft sind die Halbschalen über ein Filmscharnier unverlierbar einstückig miteinander verbunden. Dieses Arretierungselement kann rationell hergestellt werden, es kommt mit weniger Rastelementen aus und ist einfach zu handhaben.

Alle erfindungsgemäßen Varianten der Fluidleitungsverbindungsanordnung eignen sich zur Schnellmontage.

Im folgenden werden Ausführungsbeispiele der erfindungsgemäßen Fluidverbindungsanordnung anhand der Zeichnung mit neun Figuren beschrieben. Es zeigen:
- Figur 1: Eine erste Ausführungsform der Fluidverbindungsanordnung als Explosionszeichnung,
- Figur 2: die Fluidverbindungsanordnung gemäß Figur 1, jedoch vollständig zusammengebaut als Schnittzeichnung,
- Figur 3: eine Einzelheit der Fluidverbindungsanordnung, nämlich eine Verbindungsmuffe in schaubildlicher Darstellung,
- Figur 3a: die Verbindungsmuffe gemäß Figur 3 in einem Längsschnitt in größerer Darstellung,
- Figur 4: eine zweite Ausführungsform der Fluidverbindungsanordnung als Variante der ersten Ausführungsform als Explosionszeichnung,
- Figur 5: eine dritte Ausführungsform der Fluidleitungsverbindungsanordnung als Explosionszeichnung,
- Figur 6: die vollständig zusammengebaute Fluidverbindungsanordnung gemäß Figur 4 als Längsschnitt,
- Figur 7: eine Einzelheit der dritten Ausführungsform, nämlich ein Arretierungselement mit Halbschalen in aufgeklapptem Zustand in einer Vorderansicht und
- Figur 8: eine vierte Ausführungsform der Fluidleitungsverbindungsanordnung im zusammengebauten Zustand als Schnitt.

Übereinstimmende Teile der verschiedenen Ausführungsformen sind in allen Figuren mit gleichen Bezugszeichen versehen.

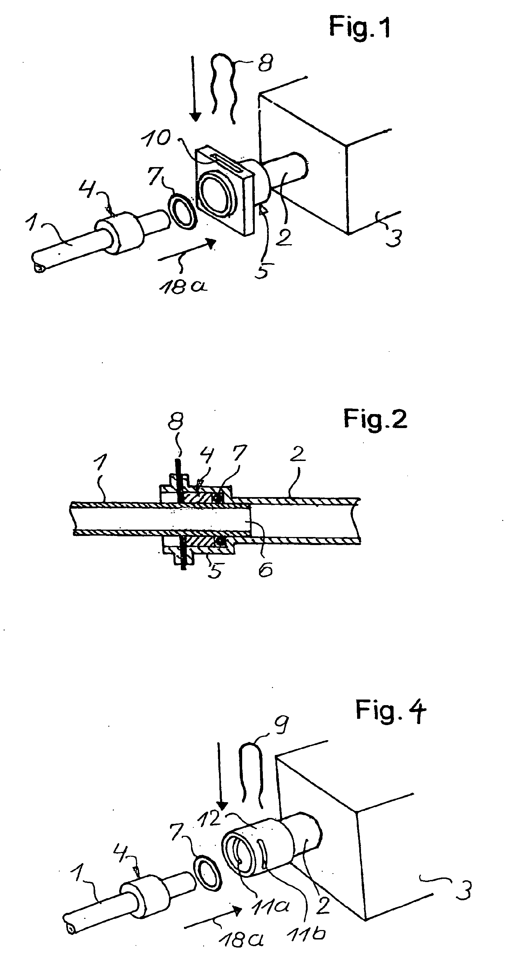

Im einzelnen ist in den Figuren 1 und 2 eine flexible Kunststoffleitung als erste Leitung 1 mit einer starren Kunststoffleitung als zweiter Leitung 2, die Teil eines nur teilweise angedeuteten Konstruktionselementes 3, z.B. eines Durchlauferhitzers ist, mit einer Fluidleitungsverbindungsanordnung zu verbinden.

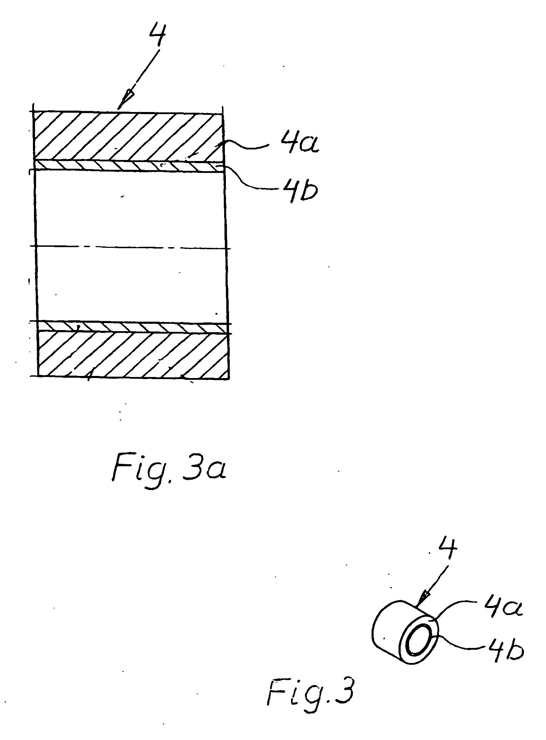

Hierzu ist auf einem Endabschnitt einer flexiblen Kunststoffleitung bzw. ersten Leitung 1, die aus einem mit Laser schweißbaren, insbesondere thermoplastischen Kunststoff besteht, kurz vor ihrem verbindungsseitigen Ende eine Verbindungsmuffe 4 aufgelasert, die der Fixierung der ersten Leitung 1 in einer Verbindungshülse 5 dient. Die hierzu verwendete Verbindungsmuffe 4 ist im einzelnen in den Figuren 3 und 3a dargestellt:
Sie besteht aus einem ringförmigen Außenschlauchabschnitt 4a aus laserstrahlendurchlässigem, transparenten Tetrafluormethylen, der mit einem entsprechenden ringförmigen Innenschlauchabschnitt 4b coextrudiert und somit form- und kraftschlüssig verbunden ist. Zur Laserstrahlenabsorption weist der Kunststoff des Innenschlauchabschnitts 4b einen Rußanteil von 1 - 2 Gewichtsprozent auf; er ist schwarz. Der Innenschlauchabschnitt hat eine typische Wanddicke von 0,25 mm und ist damit ausreichend dick, um nach dem Aufbringen der Verbindungsmuffe 4 auf dem Endabschnitt der ersten Leitung 1 - in der in den Figuren 1 und 2 dargestellten Konfiguration mit vorne herausragendem Schlauchende - in einem Werkzeug unter Laserstrahlabsorption genügend erwärmt zu werden und mit dem anliegenden Endabschnitt verschweißt zu werden. Der Außenschlauchabschnitt 4a kann, wie in Figur 3 dargestellt, eine wesentlich - mehrfach - größere Wanddicke als der Innenschlauchabschnitt 4b aufweisen, um mechanisch widerstandsfähig zu sein und eine - nicht bezeichnete - ringförmige Stirnseite zu bilden, an der ein O-Ring 7 als Dichtelement anliegen kann. Trotz der großen Wandstärke läßt das genannte transparente Material des Außenschlauchabschnitts die Energie des Laserstrahls ausreichend durchtreten und den Schweißvorgang an dem Innenschlauchabschnitt bewirken.

Als Kunststoffmaterial des Außenschlauchabschnitts und des Innenschlauchabschnitts kann auch mit gutem Ergebnis Hexafluorpropylen eingesetzt werden, mit dem gleichen Rußanteil in dem Kunststoffmaterial des Innenschlauchabschnitts 4b wie oben angegeben.

In den Figuren 3 und 3a dargestellt ist als Verbindungsmuffe 4 ein gratfrei geschnittener Abschnitt eines coextrudierten Kunststoffschlauchs mit entsprechend langem Innenschlauch und Außenschlauch aus Kunststoff wie oben zu Innenschlauchabschnitt und Außenschlauchabschitt beschrieben. Der gratfrei geschnittene, die Verbindungsmuffe 4 bildende Abschnitt ist so lang, daß die Verbindungsmuffe 4 in der Verbindungshülse 5 unter Einschluß eines O-Rings 7 sicher gehalten wird:
Nach dem Auflasern der Verbindungsmuffe 4 auf dem Endabschnitt der Leitung 1 kann eine Verbindung der Leitungen 1 und 2 mittels der Verbindungshülse 5 erfolgen, in die die Leitungen 1, 2 gesteckt werden. Zur Abdichtung ist auf der Seite der Verbindungshülse 5 der O-Ring 7 vorgesehen, der an einer nicht bezeichneten verbindungsseitigen Stirnseite der Verbindungsmuffe 4 und an einer ebenfalls nicht bezeichneten Schulter anliegt, an der die zweite Leitung 2 endet und die Verbindungshülse in einen die Verbindungsmuffe 4 aufnehmenden Abschnitt größeren Innendurchmessers übergeht. Somit ist der Abschnitt der ersten Leitung 1, der an dem verbindungsseitigen Ende der Verbindungsmuffe 4 liegt, durch den O-Ring geschoben, wobei eine Öffnung 6 der ersten Leitung 1 in der zweiten Leitung 2 positioniert ist.

Die Verbindung der beiden Leitungen 1 und 2 ist in der ersten Ausführungsform gemäß den Figuren 1 und 2 sowie in der zweiten Ausführungsform gemäß Figur 3 durch jeweils eine Federklammer 8 bzw. 9, die durch jeweils ein Paar einander in der Verbindungshülse gegenüberliegende Schlitzaufnahmen geschoben ist und damit an der dem verbindungsseitigen Ende abgewandten Stirnseite der Verbindungsmuffe 4 zur Anlage gelangt, arretiert. In der ersten Ausführungsform gemäß den Figuren 1 und 2 sind die Schlitzaufnahmen in einem erweiterten Abschnitt der Verbindungshülse 5 seitlich geschlossen; es befindet sich lediglich auf der Oberseite eine in Figur 1 erkennbare Öffnung 10 rechtwinklig zwischen den beiden nicht gezeigten eigentlichen Schlitzaufnahmen. In der Ausführungsform gemäß Figur 4 sind hingegen die Schlitzaufnahmen 11a und 11b seitlich nach außen offen, womit sich die Formgebung der Verbindungsmuffe 12 vereinfacht. Dementsprechend liegt die Federklammer 8 in der Verbindungshülse 5 innen, und die Federklammer 9 liegt bezüglich der Verbindungshülse 12 teilweise außen.

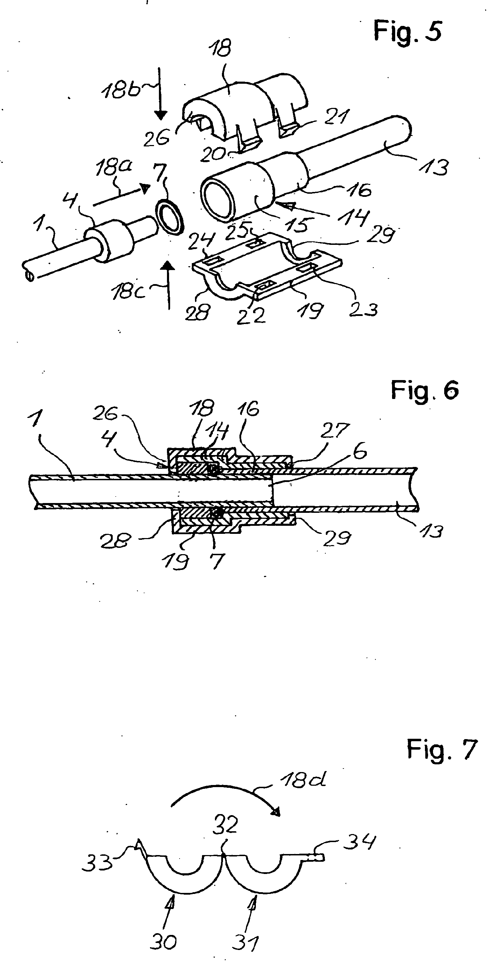

Die dritte Ausführungsform der Fluidleitungsverbindungsanordnung gemäß den Figuren 5 und 6 dient zum Verbinden einer ersten Leitung 1, die wiederum eine flexible Kunststoffleitung aus mit Laser schweißbarem Material ist, mit einer zweiten Leitung 13, die hier als starre metallische Leitung bzw. Rohr ausgeführt ist. Dementsprechend ist eine Verbindungsmuffe 4 in gleicher Weise auf einem Endabschnitt der ersten Leitung 1 gelasert wie zu Figur 1 und 2 beschrieben. Eine Verbindungshülse 14 besteht hier aus Metall. Sie weist wiederum einen ersten Abschnitt 15 relativ großen Durchmessers auf, der geeignet ist, einen Endabschnitt der ersten Leitung 1 aufzunehmen, sowie einen demgegenüber verjüngten zweiten Abschnitt 16, in den die zweite Leitung 1 3 bzw. das Rohr eingesteckt ist, um mit dem zweiten Abschnitt verlötet zu werden. Zwischen dem ersten Abschnitt und dem zweiten Abschnitt ist, wie aus Figur 6 ersichtlich, eine Schulter gebildet, an der ein O-Ring 7 zur Anlage gelangt, wenn der vordere Abschnitt der Leitung 1 mit dem O-Ring in die Verbindungshülse eingeschoben wird, bis der O-Ring 7 dicht an die axial äußere Stirnseite der Verbindungsmuffe 4 und die Schulter zwischen den Abschnitten 15, 16 drückt. Die Einschubrichtung der ersten Leitung 1 ist z.B. in Figur 5 mit einem Pfeil 18a angedeutet.

Anschließend kann die Arretierung der zusammengeschobenen Leitungen 1 und 13 erfolgen, indem zwei Halbschalen 18, 19 aus Kunststoff in Richtung der Pfeile 18b, 18c zu einer geschlossenen annähernd zylindrischen Form über der Verbindungsmuffe 4 und der Verbindungshülse 14 zusammengeklippt werden. Die Halbschale 18 weist dazu Federzungen 20, 21 als Rastelemente auf, die in Schlitze 22, 23 passen. Weitere, in Figur 4 nicht bezeichnete Federzungen können von den Schlitzen 24, 25 aufgenommen werden. Die Schlitze haben also eine Rastfunktion. Wie aus Figur 6 ersichtlich, liegen in der aufgeklippten Position der Halbschalen 18, 19 deren stirnseitige Stege 26 - 29 innen an axial inneren, d.h. der Verbindungsstelle abgewandten Stirnseiten der Verbindungsmuffe 4 und der Verbindungshülse 14 an.

Es sei bemerkt, daß die zweite Leitung 13 wiederum Bestandteil eines nicht dargestellten Konstruktionselements sein kann.

In Figur 7 von vorne gezeigte Halbschalen 30, 31 sind als Spritzteil zusammen mit einem Filmscharnier 32 geformt und weisen zur gegenseitigen Verriegelung im zusammengeklappten Zustand, siehe Pfeil 18d, deswegen weniger Federzungen, z.B. 33, und Schlitze, z.B. 34, auf, die miteinander in Eingriff gelangen können, um eine Verbindungshülse mit einer Verbindungsmuffe sicher einzuschließen.

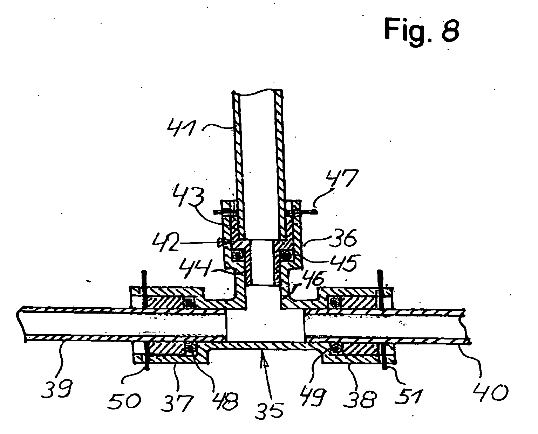

Eine weiter entwickelte Ausführungsform der Fluidleitungsverbindungsanordnung ist in Figur 8 dargestellt, in der die Fluidleitungsverbindungsanordnung ein Verbindungsteil 35 umfaßt, aus dem drei Verbindungshülsen 36, 37, 38 ausgeformt sind. Damit ist das gemeinsame Verbindungsteil zur Aufnahme von drei Leitungen geeignet, die in dem im wesentlichen T-, förmigen Verbindungsteil miteinander kommunizieren können. In grundsätzlich ähnlicher Weise können Varianten des gemeinsamen Verbindungsteils nur zur Aufnahme von zwei Leitungen vorgesehen sein, die miteinander in langgestreckter Form oder abgewinkelt verbunden werden können.

In der dreiseitigen Ausführungsform des Verbindungsteils 35 sind gemäß Figur 8 zwei flexible, mit Laser schweißbare Leitungen 39, 40 sowie eine starre Leitung 41 miteinander verbunden. Die starre Leitung kann wiederum eine metallische Rohrleitung, z.B. eines Durchlauferhitzers sein. Sie ist an ihrer Verbindungsstelle zu dem Verbindungsteil 35 mit einer aufgelöteten Verbindungsmuffe 42 versehen. Sie umfaßt einen ersten Abschnitt 43, der einen Endabschnitt der Leitung 41 aufnimmt, sowie einen demgegenüber verjüngten zweiten, endseitigen Abschnitt 44, der in einen zentralen Leitungsabschnitt des Verbindungsteils 35 eingesteckt werden kann. Zwischen dem ersten Abschnitt 43 und dem zweiten Abschnitt 44 der Verbindungsmuffe 42 ist eine Schulter gebildet, die zur Anlage eines abdichtenden O-Rings 45 dient. Der O-Ring 45 liegt andererseits auf einer Schulter der Verbindungshülse 36 bzw. eines Verbindungshülsenabschnitts des Verbindungsteils 35 auf, wo der Verbindungshülsenabschnitt in den Leitungsabschnitt 46 des Verbindungsteils 35 übergeht, der einen kleineren Durchmesser hat als der nach außen gerichtete Verbindungshülsenabschnitt. Zur Arretierung der in das Verbindungsteil 35 gesteckten starren Leitung 41 mit dem Verbindungsteil 35 und damit auch den anderen in das Verbindungsteil mündenden Leitungen dient eine Federklammer 47, die einerseits in einer nicht bezeichneten Schlitzaufnahme der Verbindungshülse 36 liegt und andererseits an eine hintere, in Figur 7 obere Stirnfläche der Verbindungsmuffe 42 anstößt.

Die Verbindungshülsen 37, 38 bzw. Verbindungshülsenabschnitte sind wie die Verbindungshülse 36 des Verbindungsteils 35 ausgeformt. Sie dienen zum Verbinden der beiden flexiblen Leitungen 39, 40 mit dem Verbindungsteil 35, wozu Endabschnitte der Leitungen 39, 40 mit nicht bezeichneten aufgelaserten Verbindungsmuffen versehen sind, wie in den Ausführungsformen gemäß den Figuren 1 bis 6. Zwischen den axial äußeren, endseitigen bzw. verbindungsseitigen Stirnseiten der Verbindungsmuffen und den Schultern der Verbindungshülsen 37, 38 sind dicht anliegende O-Ringe 48, 49 eingeschlossen. Die Endabschnitte der Leitungen 39, 40 werden auch hier durch Federklammern 50, 51 in ihrer Einsteckposition gehalten.

Das System der Fluidleitungsverbindungsanordnung umfaßt also nur wenige Bauteile, die in vielfältiger Weise miteinander kombiniert werden können, und zwar: Verbindungsmuffen, Verbindungshülsen, O-Ringe zum Abdichten und Federklammern oder einrastbare Halbschalen zur Arretierung der Verbindung.

### Bezugszahlen

- 1: erste (flexible) Leitung
- 2: zweite Leitung (starr, Kunststoff)
- 3: Konstruktionselement
- 4: Verbindungsmuffe
- 4a: Außenschlauchabschnitt
- 4b: Innenschlauchabschnitt
- 5: Verbindungshülse
- 6: Öffnung
- 7: O-Ring
- 8: Federklammer
- 9: Federklammer
- 10: Öffnung
- 1 1 a, b: Schlitzaufnahme
- 12: Verbindungshülse
- 13: zweite Leitung (starr, Metall)
- 14: Verbindungshülse (Metall)
- 15: 1. Abschnitt
- 16: 2. Abschnitt
- 18a, b, c: Pfeil
- 18: Halbschale
- 19: Halbschale
- 20: Federzunge
- 21: Federzunge
- 22: Schlitz
- 23: Schlitz
- 24: Schlitz
- 25: Schlitz
- 26: Steg
- 27: Steg
- 28: Steg
- 29: Steg
- 30: Halbschale
- 31: Halbschale
- 32: Filmscharnier
- 33: Federzunge
- 34: Schlitz
- 35: Verbindungsteil
- 36: Verbindungshülse
- 37: Verbindungshülse
- 38: Verbindungshülse
- 39: (flexible) Leitung
- 40: (flexible) Leitung
- 41: (starre) Leitung
- 42: Verbindungsmuffe
- 43: 1. Abschnitt
- 44: 2. Abschnitt
- 45: O-Ring
- 46: Leitungsabschnitt
- 47: Federklammer
- 48: O-Ring
- 49: O-Ring
- 50: Federklammer
- 51: Federklammer

## Patentansprüche

1. Fluidleitungsverbindungsanordnung für eine Kaffee- bzw. Espressomaschine, mit mindestens einem Verbindungselement, welches geeignet ist, einen Endabschnitt einer ersten Leitung mit einer zweiten Leitung, einem Anschlussstutzen oder dgl. dicht zu verbinden,
wobei auf dem Endabschnitt einer ersten Leitung (1) eine Verbindungsmuffe (4) mit einer axial äußeren ringförmigen Stirnseite und einer axial inneren ringförmigen Stirnseite form- und kraftschlüssig aufgebracht ist, wobei die Verbindungsmuffe (4) zumindest teilweise einen laserstrahldurchlässigen insbesondere thermoplastischen Kunststoff beinhaltet,
wobei die Verbindungsmuffe (4) auf den Endabschnitt der ersten Leitung (1) aus schweißbarem, insbesondere thermoplastischem Kunststoff gelasert ist,
wobei von einem Ende einer zweiten Leitung (2, 13), einem Anschlussstutzen oder dergleichen eine Verbindungshülse (5, 14) vorsteht, aus der innen eine ringförmige Schulter ausgeformt ist und die geeignet ist, den Endabschnitt der ersten Leitung (1) mit der Verbindungsmuffe (4) aufzunehmen,
und wobei an der Verbindungshülse (5, 14) ein Arretierungselement lösbar anbringbar ist, welches an der axial inneren Stirnseite der in die Verbindungshülse eingesteckten Verbindungsmuffe (4) anliegt,
**dadurch gekennzeichnet,**
**dass** die Verbindungsmuffe (4) einen ringförmigen Außenschlauchabschnitt (4a) aus einem laserstrahldurchlässigen, insbesondere thermoplastischen Kunststoff und einen mit diesem coextrudierten ringförmigen Innenschlauchabschnitt (4b) aus einem laserstrahlabsorbierenden schweißbaren, insbesondere thermoplastischen Kunststoff umfasst,
**dass** die Materialien des ringförmigen Außenschlauchabschnitts (4a) und des ringförmigen Innenschlauchabschnitts (4b) auf dem gleichen laserstrahldurchlässigen Kunststoff basieren und
**dass** der Kunststoff des ringförmigen Innenschlauchabschnitts (4b) zusätzlich laserstrahlabsorbierend modifiziert ist.

2. Fluidleitungsverbindungsanordnung nach Anspruch 1,
**dadurch gekennzeichnet,**
**dass** der Kunststoff des ringförmigen Innenschlauchabschnitts (4b) laserstrahlabsorbierend eingefärbt ist.

3. Fluidleitungsverbindungsanordnung nach Anspruch 1,
**dadurch gekennzeichnet,**
**dass** das thermoplastische Material des ringförmigen Innenschlauchabschnitts (4b) aus einem an sich laserstrahldurchlässigen Kunststoff besteht, in dem Rußpartikel verteilt sind.

4. Fluidleitungsverbindungsanordnung nach Anspruch 3,
**dadurch gekennzeichnet,**
**dass** der Gewichtsanteil der Rußpartikel in dem Kunststoff des ringförmigen Innenschlauchabschnitts (4b) 1 - 2 % beträgt.

5. Fluidleitungsverbindungsanordnung nach den Ansprüchen 1 bis 4,
**dadurch gekennzeichnet,**
**dass** die Wanddicke des ringförmigen Innenschlauchabschnitts (4b) 0,2 bis 0,3 mm beträgt.

6. Fluidleitungsverbindungsanordnung nach wenigstens einem der Ansprüche 1 bis 5,
**dadurch gekennzeichnet,**
**dass** der Schlauch als erste Leitung (1) und die Verbindungsmuffe (4), abgesehen von der Modifikation des Kunststoffs dessen ringförmigen Innenschlauchabschnittes (4b), aus dem gleichen schweißbaren Kunststoff bestehen.

7. Fluidleitungsverbindungsanordnung nach wenigstens einem der Ansprüche 1 bis 6,
**dadurch gekennzeichnet,**
**dass** die Verbindungsmuffe (4) aus einem Copolymer besteht.

8. Fluidleitungsverbindungsanordnung nach Anspruch 7,
**dadurch gekennzeichnet,**
**dass** die Verbindungsmuffe (4) aus Tetrafluormethylen hergestellt ist.

9. Fluidleitungsverbindungsanordnung nach Anspruch 8,
**dadurch gekennzeichnet,**
**dass** die Verbindungsmuffe (4) aus Hexafluorpropylen gefertigt ist.

10. Fluidleitungsverbindungsanordnung nach wenigstens einem der vorangehenden Ansprüche,
**dadurch gekennzeichnet,**
**dass** der ringförmige Innenschlauchabschnitt (4b) der Verbindungsmuffe (4) innen eine durchgehend zylindrische Umfangswand aufweist und auf einen durchgehend zylindrischen Endabschnitt des Schlauchs als erste Leitung (1) gelasert ist.

11. Fluidleitungsverbindungsanordnung nach wenigstens einem der Ansprüche 1 bis 8,
**dadurch gekennzeichnet,**
**dass** die Verbindungsmuffe (4) als zylindrischer Ring ausgebildet ist, der in einem Abstand von einem Ende des Schlauches als erste Leitung (1) auf deren zylindrischen Endabschnitt aufgelasert ist.

12. Fluidleitungsverbindungsanordnung nach wenigstens einem der Ansprüche 1 bis 11,
**dadurch gekennzeichnet,**
**dass** ein O-Ring (7) zwischen der ringförmigen Schulter der Verbindungshülse (5, 14) und der axial äußeren ringförmigen Stirnseite der Verbindungsmuffe (4) eingeschlossen ist, dergestalt, dass der O-Ring (7) einerseits an der axial äußeren ringförmigen Stirnseite der Verbindungsmuffe (4) und andererseits an der ringförmigen Schulter der Verbindungshülse (5, 14) abdichtend anliegt.

13. Fluidleitungsverbindungsanordnung nach wenigstens einem der Ansprüche 1 bis 11,
**dadurch gekennzeichnet,**
**dass** die axial äufere ringförmige Stirnseite der Verbindungsmuffe (4) unmittelbar an der ringförmigen Schulter der Verbindungshülse (5, 14) abdichtend anliegt.

14. Fluidleitungsverbindungsanordnung nach wenigstens einem der Ansprüche 1 bis 13,
**dadurch gekennzeichnet,**
**dass** die Verbindungshülse (5, 14) abgestuft zylindrisch ist.

15. Fluidleitungsverbindungsanordnung nach wenigstens einem der Ansprüche 1 bis 14;
**dadurch gekennzeichnet,**
**dass** die Verbindungshülse (5) ein Kunststoffspritzteil ist.

16. Fluidleitungsverbindungsanordnung nach Anspruch 15,
**dadurch gekennzeichnet,**
**dass** die Verbindungshülse (5) zusammen mit dem Ende der zweiten Leitung (2) oder dgl. aus Kunststoff ausgeformt ist.

17. Fluidleitungsverbindungsanordnung nach wenigstens einem der Ansprüche 1 bis 14,
**gekennzeichnet durch**
eine metallische Verbindungshülse (14), die auf einen Endabschnitt eines Metallrohrs als zweite Leitung (13) aufgelötet ist.

18. Fluidleitungsverbindungsanordnung nach mindestens einem der vorangehenden Ansprüche,
**dadurch gekennzeichnet,**
**dass** mindestens zwei Verbindungshülsen (36, 37, 38) in einem gemeinsamen Verbindungsteil (35) ausgebildet sind, welches mindestens einen die Verbindungshülsen verbindenden Leitungsabschnitt (46) umfasst.

19. Fluidleitungsverbindungsanordnung nach wenigstens einem der Ansprüche 1 bis 15 und 17,
**dadurch gekennzeichnet,**
**dass** die Verbindungshülse (5) integraler Bestandteil eines Konstruktionselements (3) ist.

20. Fluidleitungsverbindungsanordnung nach wenigstens einem der vorangehenden Ansprüche,
**dadurch gekennzeichnet,**
**dass** das Arretierungselement als Federklammer (8, 9, 47, 50, 51) ausgebildet ist, die durch eine innen seitlich offene Schlitzaufnahme (10, 11, 11 b) in die Verbindungshülse (5, 12) reicht und an der axial inneren ringförmigen Stirnseite der eingesteckten Verbindungsmuffe (4, 42) zur Anlage gelangt.

21. Fluidleitungsverbindungsanordnung nach Anspruch 20,
**dadurch gekennzeichnet,**
**dass** die Schlitzaufnahme (11a, 1 1 b) der Verbindungshülse (12) auch außen seitlich offen ist.

22. Fluidleitungsverbindungsanordnung nach Anspruch 20,
**dadurch gekennzeichnet,**
**dass** die Schlitzaufnahme (10) der Verbindungshülse (5) außen seitlich geschlossen ist.

23. Fluidleitungsverbindungsanordnung nach wenigstens einem der Ansprüche 1 bis 19,
**dadurch gekennzeichnet,**
**dass** das Arretierungselement als miteinander verbindbare Halbschalen (18, 19, 30, 31) mit Rastelementen ausgebildet ist,
und **dass** die Halbschalen an ihren Stirnseiten Stege (26, 27, 28, 29) mit Ausnehmungen aufweisen, derart, dass die Verbindungsmuffe (4) und die Verbindungshülse (14), welche die Verbindungsmuffe aufnimmt, zwischen den aufeinander geklappten, miteinander verbundenen Halbschalen (18, 19) und den Stegen (26 - 29) eingeschlossen sind.

24. Fluidleitungsverbindungsanordnung nach Anspruch 23,
**dadurch gekennzeichnet,**
**dass** die beiden Halbschalen (30, 31) aus Kunststoff bestehen und über ein Filmscharnier (32) einstückig verbunden sind.

25. Fluidleitungsverbindungsanordnung nach wenigstens einem der Ansprüche 1 bis 24,
**dadurch gekennzeichnet,**
**dass** die Verbindungsmuffe rundum dicht auf den Endabschnitt der ersten Leitung gelasert ist.

## Claims

1. Connection arrangement for fluid conduits for a coffee or an espresso machine including at least one connecting element which is suited to hermetically seal an end section of a first conduit with a second conduit,
a connecting socket or the like,
wherein onto the end section of a first conduit (1), a connecting sleeve (4) having an axial outer annular front side and an axial inner annular front side is form- and force-lockingly applied,
wherein the connecting sleeve (4) includes, at least partly, a laser beam permeable material, particularly thermoplastic material,
wherein the connecting sleeve (4) is lasered onto the end section of the first conduit (1) of weldable, particularly thermoplastic, material,
wherein from an end of a second conduit (2, 13), from a connecting sleeve or the like, a connecting casing (5, 14) extends from which, inside, an annular shoulder is shaped out and which is suited to receive the end section of the first conduit (1) including the connecting sleeve (4),
and wherein to the connecting casing 5, 14) a stop element can detachably be applied which rests against the axially inner front side of the connecting sleeve (4) inserted into the connecting casing,
**characterized in**
**that** the connecting sleeve (4) comprises an annular external hose section (4a) of a laser beam permeable material, particularly thermoplastic material, and, co-extruded with it, an annular internal hose section (4b) of a laser beam absorbing weldable, particularly thermoplastic, material,
**that** the materials of the annular external hose section (4a) and of the annular internal hose section (4b) are based on the same laser beam permeable plastic material, and
**that** the plastic material of the annular internal hose section (4b) is, additionally, modified to be laser beam absorbent.

2. Connection arrangement for fluid conduits according to claim 1,
**characterized in**
**that** the plastic material of the annular internal hose section (4b) is laser beam absorbingly dyed.

3. Connection arrangement for fluid conduits according to claim 1,
**characterized in**
**that** the thermoplastic material of the annular internal hose section (4a) consists of a plastic material which per se is laser beam permeable in which carbon black particles are distributed.

4. Connection arrangement for fluid conduits according to claim 3,
**characterized in**
**that** the percentage by weight of the carbon black particles in the plastic material of the annular internal hose section (4b) amounts to 1 to 2 per cent.

5. Connection arrangement for fluid conduits according to claims 1 through 4,
**characterized in**
**that** the wall thickness of the annular internal hose section (4b) amounts to 0.2 to 0.3 mm.

6. Connection arrangement for fluid conduits according to at least one of claims 1 through 5,
**characterized in**
**that** the hose as first conduit (1) and the connecting sleeve (4), except for the modification of the plastic material of its annular internal hose section (4b), consist of the same weldable plastic material.

7. Connection arrangement for fluid conduits according to at least one of claims 1 through 6,
**characterized in**
**that** the connecting sleeve (4) consists of a copolymer.

8. Connection arrangement for fluid conduits according to claim 7,
**characterized in**
**that** the connecting sleeve (4) is made of tetra fluoro methylene.

9. Connection arrangement for fluid conduits according to claim 8,
**characterized in**
**that** the connecting sleeve (4) is made of hexa fluoro propylene.

10. Connection arrangement for fluid conduits according to at least one of the foregoing claims,
**characterized in**
**that** the annular internal hose section (4b) of the connecting sleeve (4) includes, at the inside, a continuous cylindrical circumferential wall and is lasered onto a continuous cylindrical end section of the hose as first conduit (1).

11. Connection arrangement for fluid conduits according to at least one of claims 1 through 8,
**characterized in**
**that** the connecting sleeve (4) is shaped as a cylindrical ring which is lasered, distant from an end of the hose, as first conduit (1) onto its cylindrical end section.

12. Connection arrangement for fluid conduits according to at least one of claims 1 through 11,
**characterized in**
**that** an O-ring (7) is sandwiched between the annular shoulder of the connecting casing (5, 14) and the axially outer annular front side of the connecting sleeve (4) such that the O-ring sealingly rests against the axially outer annular front side of the connecting sleeve (4), on one hand, and against the annular shoulder of the connecting casing (5, 14), on the other.

13. Connection arrangement for fluid conduits according to at least one of claims 1 through 11,
**characterized in**
**that** the axially outer annular front side of the connecting sleeve (14) sealingly rests directly against the annular shoulder of the connecting casing (5, 14).

14. Connection arrangement for fluid conduits according to at least one of claims 1 through 13,
**characterized in**
**that** the connecting casing (5, 14) is stepped cylindrically.

15. Connection arrangement for fluid conduits according to at least one of claims 1 through 14,
**characterized in**
**that** the connecting casing (5) is a plastic injection molded part.

16. Connection arrangement for fluid conduits according to claim 15,
**characterized in**
**that** the connecting casing (5) together with the end of the second conduit (2) or the like is shaped of plastic material.

17. Connection arrangement for fluid conduits according to at least one of claims 1 through 14,
**characterized by**
a metallic connecting casing (14) soldered onto an end section of a metallic tube as second conduit (13).

18. Connection arrangement for fluid conduits according to at least one of the foregoing claims,
**characterized in**
**that** at least two connecting casings (36, 37, 38) are provided in one common connecting part (35) which includes at least one conduit section (46) connecting the connecting casings.

19. Connection arrangement for fluid conduits according to at least one of claims 1 through 15 and 17,
**characterized in**
**that** the connecting casing (5) constitutes an integral part of the constructional element (3).

20. Connection arrangement for fluid conduits according to at least one of the foregoing claims,
**characterized in**
**that** the stop element is shaped as a spring clip (8, 9, 47, 50, 51) which extends through a slit port (10, 11, 11b) open at the inner side into the connecting casing (5, 12) and contacts the axially inner annular front side of the inserted connecting sleeve (4, 42).

21. Connection arrangement for fluid conduits according to claim 20,
**characterized in**
**that** the slit port (11a, 11b) of the connecting casing (12) is also open laterally at its outside.

22. Connection arrangement for fluid conduits according to claim 20,
**characterized in**
**that** the slit port (10) of the connecting casing (5) is closed laterally at its outside.

23. Connection arrangement for fluid conduits according to at least one of claims 1 through 19,
**characterized in**
**that** the stop element is designed as half shells (18, 19, 30, 31) which are suited to be joined with latching elements,
and **that** on the front sides of the half shells passages having recesses are provided such that the connecting sleeve (4) and the connecting casing (14) which incorporates the connecting sleeve are enclosed between the half shells (18, 19) put together and connected with one another and between the passages (26 - 29).

24. Connection arrangement for fluid conduits according to claim 23,
**characterized in**
**that** the two half shells (30, 31) consist of plastic material and are connected by means of an integrated hinge (32) to be one piece.

25. Connection arrangement for fluid conduits according to at least one of claims 1 through 24,
**characterized in**
**that** the connecting sleeve is lasered around and tightly onto the end section of the first conduit.

## Revendications

1. Dispositif de raccordement de conduites de fluide pour machine à café ou à expresso, comprenant au moins un élément de raccordement qui est approprié pour raccorder de façon étanche un segment terminal d'une première conduite à une deuxième conduite, à une tubulure de raccordement ou à un élément analogue,
dans lequel un manchon de raccordement (4) présentant un côté frontal annulaire axialement extérieur et un côté frontal annulaire axialement intérieur est appliqué sur le segment terminal d'une première conduite (1) par une liaison par engagement de forme et par action de force,
dans lequel le manchon de raccordement (4) comprend au moins en partie une matière plastique, en particulier thermoplastique, transparente aux rayons laser,
dans lequel le manchon de raccordement (4) est fixé au rayon laser sur le segment terminal de la première conduite (1) faite d'une matière plastique, en particulier thermoplastique, soudable,
dans lequel une douille de raccordement (5, 14), depuis laquelle un épaulement annulaire est formé intérieurement, fait saillie depuis une extrémité d'une deuxième conduite (2, 13), d'une tubulure de raccordement ou d'un élément analogue, ladite douille de raccordement étant appropriée pour recevoir le segment terminal de la première conduite (1) munie du manchon de raccordement (4),
et dans lequel un élément d'arrêt, qui repose contre le côté frontal axialement intérieur du manchon de raccordement (4) emboîté dans la douille de raccordement, peut être monté de façon démontable sur la douille de raccordement (5, 14),
**caractérisé**
**en ce que** le manchon de raccordement (4) comprend un segment de tuyau extérieur annulaire (4a) fait d'une matière plastique, en particulier thermoplastique, transparente aux rayons laser, et un segment de tuyau intérieur annulaire (4b) fait d'une matière plastique, en particulier thermoplastique, transparente aux rayons laser et soudable, coextrudé avec le premier segment,
**en ce que** les matières du segment de tuyau extérieur annulaire (4a) et du segment de tuyau intérieur annulaire (4b) sont basées sur la même matière plastique transparente aux rayons laser, et
**en ce que** la matière plastique du segment de tuyau intérieur annulaire (4b) est en supplément modifiée pour être absorbante pour les rayons laser.

2. Dispositif de raccordement de conduites de fluide selon la revendication 1, **caractérisé en ce que** la matière plastique du segment de tuyau intérieur annulaire (4b) est colorée pour être absorbante pour les rayons lasers.

3. Dispositif de raccordement de conduites de fluide selon la revendication 1, **caractérisé en ce que** la matière thermoplastique du segment de tuyau intérieur annulaire (4b) se compose d'une matière plastique en soi transparente aux rayons lasers et dans laquelle sont réparties des particules de noir de carbone.

4. Dispositif de raccordement de conduites de fluide selon la revendication 3, **caractérisé en ce que** la proportion en poids des particules de noir de carbone dans la matière plastique du segment de tuyau intérieur annulaire (4b) est de 1 à 2%.

5. Dispositif de raccordement de conduites de fluide selon les revendications 1 à 4, **caractérisé en ce que** l'épaisseur de paroi du segment de tuyau intérieur annulaire (4b) est de 0,2 à 0,3 mm.

6. Dispositif de raccordement de conduites de fluide selon au moins l'une des revendications 1 à 5, **caractérisé en ce que** le tuyau constituant la première conduite (1) et le manchon de raccordement (4), abstraction faite de la modification de la matière plastique de son segment de tuyau intérieur annulaire (4b), sont composés de la même matière plastique soudable.

7. Dispositif de raccordement de conduites de fluide selon au moins l'une des revendications 1 à 6, **caractérisé en ce que** le manchon de raccordement (4) se compose d'un copolymère.

8. Dispositif de raccordement de conduites de fluide selon la revendication 7, **caractérisé en ce que** le manchon de raccordement (4) est fabriqué en tétrafluorométhylène.

9. Dispositif de raccordement de conduites de fluide selon la revendication 8, **caractérisé en ce que** le manchon de raccordement (4) est fabriqué en hexafluoropropylène,

10. Dispositif de raccordement de conduites de fluide selon au moins l'une des revendications précédentes, **caractérisé en ce que** le segment de tuyau intérieur annulaire (4b) du manchon de raccordement (4) présente intérieurement une paroi circonférentielle cylindrique de bout en bout et est fixé au rayon laser sur un segment terminal, cylindrique de bout en bout, du tuyau constituant la première conduite (1).

11. Dispositif de raccordement de conduites de fluide selon au moins l'une des revendications 1 à 8, **caractérisé en ce que** le manchon de raccordement (4) est réalisé sous la forme d'une bague cylindrique qui est fixée au rayon laser sur le segment terminal cylindrique du tuyau constituant la première conduite (1), à distance d'une extrémité de celle-ci.

12. Dispositif de raccordement de conduites de fluide selon au moins une des revendications 1 à 11, **caractérisé en ce qu'**un joint torique (7) est inclus entre l'épaulement annulaire de la douille de raccordement (5, 14) et le côté frontal annulaire axialement extérieur du manchon de raccordement (4), de manière telle que le joint torique (7) est appuyé de façon étanche d'une part contre le côté frontal annulaire axialement extérieur du manchon de raccordement (4) et d'autre part contre l'épaulement annulaire de la douille de raccordement (5, 14).

13. Dispositif de raccordement de conduites de fluide selon au moins l'une des revendications 1 à 11, **caractérisé en ce que** le côté frontal annulaire axialement extérieur du manchon de raccordement (4) est directement appuyé de façon étanche contre l'épaulement annulaire de la douille de raccordement (5, 14).

14. Dispositif de raccordement de conduites de fluide selon au moins l'une des revendications 1 à 13, **caractérisé en ce que** la douille de raccordement (5, 14) est cylindrique et étagée.

15. Dispositif de raccordement de conduites de fluide selon au moins l'une des revendications 1 à 14, **caractérisé en ce que** la douille de raccordement (5) est une pièce de matière plastique moulée par injection.

16. Dispositif de raccordement de conduites de fluide selon la revendication 15, **caractérisé en ce que** la douille de raccordement (5) est façonnée en matière plastique avec l'extrémité de la deuxième conduite (2) ou analogue.

17. Dispositif de raccordement de conduites de fluide selon au moins l'une des revendications 1 à 14, **caractérisé par** une douille de raccordement métallique (14) qui est brasée sur un segment terminal d'un tube métallique constituant la deuxième conduite (13).

18. Dispositif de raccordement de conduites de fluide selon au moins l'une des revendications précédentes, **caractérisé en ce qu'**au moins deux douilles de raccordement (36, 37, 38) constituent une pièce de raccordement commune (35), laquelle comprend au moins un segment de conduite (46) qui relie les douilles de raccordement.

19. Dispositif de raccordement de conduites de fluide selon au moins l'une des revendications 1 à 15 et 17, **caractérisé en ce que** la douille de raccordement (5) est un composant intégré d'un élément de construction (3).

20. Dispositif de raccordement de conduites de fluide selon au moins l'une des revendications précédentes, **caractérisé en ce que** l'élément d'arrêt est constitué par une agrafe élastique (8, 9, 47, 50, 51) qui pénètre dans la douille de raccordement (5, 12) en traversant un logement en forme de fente ouvert latéralement vers l'intérieur (10, 11, 11b) et qui repose en appui contre le côté frontal annulaire axialement intérieur du manchon de raccordement (4, 42) emboîté.

21. Dispositif de raccordement de conduites de fluide selon la revendication 20, **caractérisé en ce que** le logement en forme de fente (11a, 11b) de la douille de raccordement (12) est aussi ouvert latéralement vers l'extérieur.

22. Dispositif de raccordement de conduites de fluide selon la revendication 20, **caractérisé en ce que** le logement en forme de fente (10) de la douille de raccordement (5) est fermé latéralement vers l'extérieur.

23. Dispositif de raccordement de conduites de fluide selon au moins l'une des revendications 1 à 19, **caractérisé en ce que** l'élément d'arrêt est réalisé sous la forme de demi-coquilles (18, 19, 30, 31) pouvant être assemblées l'une à l'autre et munies d'éléments d'encliquetage.
et **en ce que** les demi-coquilles présentent sur leurs côtés frontaux des arêtes (26, 27, 28, 29) munies d'évidements de telle sorte que le manchon de raccordement (4) et la douille de raccordement (14) qui reçoit le manchon de raccordement sont enfermés entre les demi-coques (18, 19), rabattues l'une sur l'autre et assemblées l'une à l'autre, et les arêtes (26 - 29).

24. Dispositif de raccordement de conduites de fluide selon la revendication 23, **caractérisé en ce que** les deux demi-coquilles (30, 31) sont faites de matière plastique et assemblées en une seule pièce par une charnière film (32).

25. Dispositif de raccordement de conduites selon au moins l'une des revendications 1 à 24, **caractérisé en ce que** le manchon de raccordement est fixé au rayon laser sur le segment terminal de la première conduite de façon étanché sur tout le tour.
